# EUROPEAN PATENT APPLICATION

(11) **EP 4 679 565 A1**
(43) Date of publication of application: **14.01.2026**
(21) Application number: 25178780.0
(22) Date of filing: 26.05.2025
(51) Int. Cl.: H01M 10/613, H01M 10/6553, H01M 10/6556, H01M 10/6569, H01M 50/209, H01M 50/503

(54) **TERMINAL COOLING PART FOR ELECTRICITY STORAGE DEVICE, BUS BAR FOR ELECTRICITY STORAGE DEVICE, AND ELECTRICITY STORAGE DEVICE MODULE**

(30) Priority: 10.07.2024 JP 2024111221
(71) Applicant: Prime Planet Energy & Solutions, Inc., Chuo-ku, Tokyo 103-0022 (JP)
(72) Inventor: FUJII, Yusuke, Tokyo, 103-0022 (JP)
(74) Representative: Kuhnen & Wacker Patent- und Rechtsanwaltsbüro PartG mbB

(57) **Abstract**

A terminal cooling part (30) for an electricity storage device (100) includes a first plate (31) and a second plate (36). The first plate includes a joining portion (31a) that is joined to the electrode terminal (60,65). The second plate is opposed to a surface of the first plate at an opposite side to a surface of the first plate that is superimposed on the end surface of the electrode terminal except for the joining portion. The second plate includes a raised portion (37) that forms a refrigerant circulating space (39) between the raised portion and the first plate. The second plate is configured such that a portion around the raised portion is joined to the first plate. The second plate includes a supply port (36a) via which a refrigerant is supplied to the refrigerant circulating space, and a discharge port (36b)via which the refrigerant is discharged from the refrigerant circulating space.

## Description

The present disclosure relates to a terminal cooling part for an electricity storage device, a bus bar for an electricity storage device, and an electricity storage device module.

### BACKGROUND

Japanese Laid-open Patent Publication No. 2023-080658 discloses a battery system including multiple battery cells, multiple bus bars, multiple insulating tubes, and a refrigerant passage. Each of the bus bars connects between external terminals of adjacent ones of the battery cells. The bus bar has a hollow structure. Each of the insulting tubes is provided between the bus bars. The insulating tube has electric insulation property. The refrigerant passage is formed inside the multiple bus bars and inside the multiple insulating tubes. The refrigerant passage causes an electrically insulating refrigerant that cools the multiple bus bars to circulate.

### SUMMARY

The present inventor desires to increase cooling efficiency of an electrode terminal of an electricity storage device.

A terminal cooling part for an electricity storage device disclosed herein includes a first plate formed of metal and a second plate formed of metal. The first plate is superimposed on an end surface of an electrode terminal of the electricity storage device. The first plate includes a joining portion that is joined to the electrode terminal. The second plate is opposed to a surface of the first plate at an opposite side to a surface of the first plate that is superimposed on the end surface of the electrode terminal except for the joining portion. The second plate includes a raised portion that forms a refrigerant circulating space between the raised portion and the first plate. The second plate is configured such that a portion around the raised portion is joined to the first plate. The second plate includes a supply port via which a refrigerant is supplied to the refrigerant circulating space, and a discharge port via which the refrigerant is discharged from the refrigerant circulating space.

According to the terminal cooling part for an electricity storage device, cooling efficiency of the electrode terminal of the electricity storage device is increased.

### BRIEF DESCRIPTION OF THE DRAWINGS

FIG. 1 is a perspective view of an electricity storage device module 200.
FIG. 2 is a schematic view of an electricity storage device 100.
FIG. 3 is a plan view of a bus bar 20.
FIG. 4 is a schematic view illustrating a configuration of the bus bar 20.
FIG. 5 is a cross-sectional view taken along the line V-V of FIG. 3.
FIG. 6 is a schematic view of an electricity storage device module 200A according to another embodiment.
FIG. 7 is a schematic view of an electricity storage device module 200B according to still another embodiment.

### DETAILED DESCRIPTION OF THE EMBODIMENTS

Embodiments of a technology disclosed herein will be described below with reference to the accompanying drawings. As a matter of course, the embodiments described herein are not intended to be particularly limiting the present disclosure. The accompanying drawings are schematic and do not necessarily reflect actual members or portions. Members/portions that have the same effect will be denoted by the same sign as appropriate, and the overlapping description will be omitted as appropriate. In the following description, reference signs "L," "R," "F," "Rr," "U," and "D" in the drawings respectively denote "left," "right," "front," "rear," "up," and "down," and reference signs "X," Y," and "Z" in the drawings respectively denote "a short side direction," "a long side direction," and "a height direction" of an electricity storage device. However, these directions are defined for convenience of explanation, and do not limit an installation form of the electricity storage device.

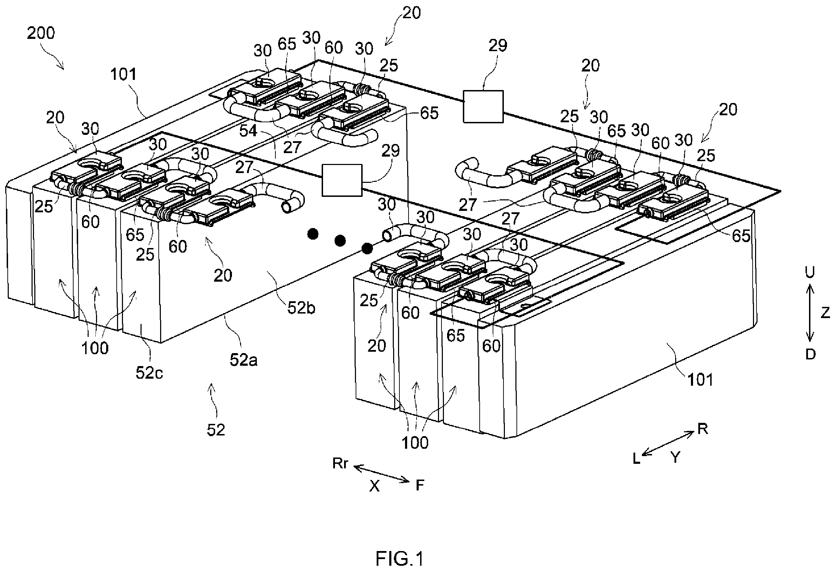

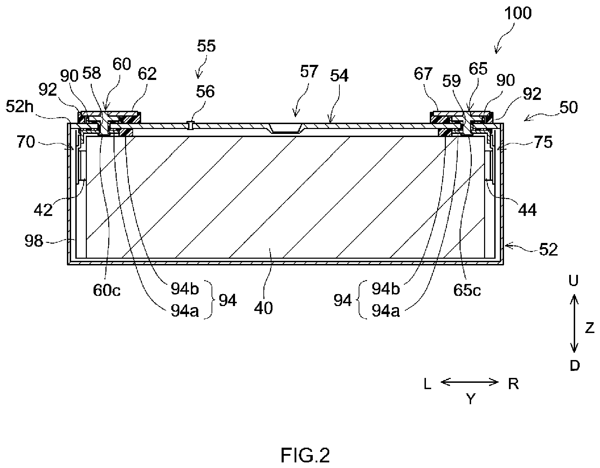

Herein, a terminal cooling part for an electricity storage device will be described with a configuration of an electricity storage device module. FIG. 1 is a perspective view of an electricity storage device module 200. In FIG. 1, connection between the electricity storage device module 200 and a refrigerant supply device 29 are schematically illustrated. In FIG. 1, illustration of a gas discharge valve provided in a lid 54 is omitted. FIG. 2 is a schematic view of an electricity storage device 100. In FIG. 2, a configuration of inside of the electricity storage device 100 is schematically illustrated. Note that, in the drawings, a direction in which the refrigerant flows is indicated by an arrow as appropriate.

### <Electricity Storage Device Module 200>

As illustrated in FIG. 1, the electricity storage device module 200 includes multiple electricity storage devices 100 and bus bars 20. The multiple electricity storage devices 100 are stacked along a short side direction X (stacking direction) of the multiple electricity storage devices 100. Short sides of the multiple electricity storage devices 100 are aligned along the stacking direction. An unillustrated spacer may be arranged between adjacent ones of the electricity storage devices 100. An end plate 101 is arranged at outside of each of ones of the multiple electricity storage devices 100 that are provided at both ends. The end plates 101 may be constrained by an unillustrated beam member.

### <Electricity Storage Device 100>

As illustrated in FIG. 2, the electricity storage device 100 includes a case 50 that houses an electrode body 40 and an electrolytic solution (not illustrated). In this specification, the term "electricity storage device" refers to a device that is capable of being charged and discharged repeatedly. The electricity storage device encompasses a secondary battery, such as a lithium-ion secondary battery, a nickel-hydrogen battery, or the like. The electricity storage device encompasses a capacitor, such as a lithium-ion capacitor, an electrical double-layer capacitor, or the like. The electricity storage device 100 will be described below using a lithium-ion secondary battery as an example.

### <Case 50>

The case 50 is a case that houses the electrode body 40. A conventionally known material may be used for the case 50 without any particular limitation. The case 50 may be, for example, formed of metal. Examples of a material of the case 50 include aluminum, an aluminum alloy, iron, an iron alloy, or the like. The case 50 includes a case body 52 and a lid 54.

The case body 52 includes a bottom wall 52a having an approximately rectangular shape in a plan view, a pair of first side walls 52b each extending from a corresponding one of long sides of the bottom wall 52a upwardly in a height direction Z, and a pair of second side walls 52c each extending from a corresponding one of short sides of the bottom wall 52a upwardly in the height direction Z (see FIG. 1). An opening 52h is formed at an upper portion of the case body 52.

The lid 54 is a plate-like member having an approximately rectangular shape in a plan view. The lid 54 is a member that closes the opening 52h of the case body 52. A liquid injection hole 55 and a gas discharge valve 57 are provided in the lid 54. The liquid injection hole 55 is a hole provided for injecting an electrolytic solution (not illustrated) into the case 50. After injecting the electrolytic solution, the liquid injection hole 55 is sealed by a sealing member 56. The gas discharge valve 57 is a thin portion that is designed to break (open) and discharge gas out of the case 50 when a large amount of gas is generated in the case 50.

Terminal insertion holes 58 and 59 to which a positive electrode terminal 60 and a negative electrode terminal 65 are attached, respectively, are formed in the lid 54. Each of the terminal insertion holes 58 and 59 is formed at a corresponding one of end portions of the lid 54 in a long side direction Y. Each of the positive electrode terminal 60 and the negative electrode terminal 65 has a parallelepiped shape. In a top plan view, each of the positive electrode terminal 60 and the negative electrode terminal 65 has a rectangular shape.

Each of the positive electrode terminal 60 and the negative electrode terminal 65 is attached to a corresponding one of the end portions of the lid 54 in the long side direction Y of the electricity storage device 100. The positive electrode terminal 60 is connected to a positive electrode external conductive member 62 having a plate-like shape at outside of the case 50. The negative electrode terminal 65 is connected to a negative electrode external conductive member 67 having a plate-like shape at the outside of the case 50. Each of the positive electrode external conductive member 62 and the negative electrode external conductive member 67 is connected to another electricity storage device and an external device via an external connection member (bus bar 20 or the like).

A positive electrode current collecting portion 70 and a negative electrode current collecting portion 75 are attached to an inner surface of the lid 54. Each of the positive electrode current collecting portion 70 and the negative electrode current collecting portion 75 is a plate-like conductive member extending along the inner surface of the lid 54. A lower end portion 60c of the positive electrode terminal 60 is connected to the positive electrode current collecting portion 70. A lower end portion 65c of the negative electrode terminal 65 is connected to the negative electrode current collecting portion 75.

The lid 54 is provided with various insulating members that prevent conduction between the case 50 (the case body 52 and the lid 54) and the electrode terminals (the positive electrode terminal 60 and the negative electrode terminal 65). A gasket 90 that prevents conduction between the electrode terminals and the lid 54 is mounted to each of the terminal insertion holes 58 and 59 of the lid 54. An external insulating member 92 is arranged between the positive electrode external conductive member 62 (or the negative electrode external conductive member 67) and an outer surface of the lid 54. An internal insulating member 94 is arranged between the positive electrode current collecting portion 70 (or the negative electrode current collecting portion 75) and the inner surface of the lid 54. The internal insulating member 94 includes a plate-like base portion 94a attached to the inner surface of the lid 54. The internal insulating member 94 includes a protruding portion 94b that protrudes toward the electrode body 40 from the base portion 94a. The protruding portion 94b regulates movement of the electrode body 40 in an up-down direction and prevents the electrode body 40 and the lid 54 from directly contacting each other. There is no particular limitation on materials of the insulting members described above, as long as each of the materials has predetermined insulating property. As an insulating member, a synthetic resin material, such as polyolefin-based resin, fluorocarbon-based resin, or the like, can be used. Note that, in FIG. 1, illustration of the insulating member (the external insulating member 92) is omitted.

The lid 54 is attached to the upper portion of the case body 52 to seal the opening 52h in a state where the electrode body 40 is attached thereto via the positive electrode current collecting portion 70 and the negative electrode current collecting portion 75.

### <Electrode Body 40>

The electrode body 40 may be similar to a known electrode body, and there is no particular limitation thereon. The electrode body 40 includes a positive electrode and a negative electrode (not illustrated). The electrode body 40 can be, for example, a flat wound electrode body obtained by stacking a band-like positive electrode and a band-like negative electrode with a band-like separator interposed therebetween such that the positive electrode and the negative electrode are insulated from each other and winding an obtained stacked body with a winding axis as a center. The electrode body 40 may be a stacked electrode body in which a quadrangular (typically rectangular) positive electrode and a quadrangular (typically rectangular) negative electrode are stacked so as to be insulated from each other.

The positive electrode includes a positive electrode core that is a foil-like metal member and a positive electrode active material layer formed on a surface of the positive electrode core. As the positive electrode core, a metal material, such as aluminum, an aluminum alloy, or the like, that has predetermined conductivity can be used. The positive electrode active material layer is a layer including a positive electrode material. The positive electrode material is a material that is capable of reversibly storing and releasing charge carriers in a relationship with a negative electrode active material that will be described later. As the positive electrode material, for example, lithium-transition metal compound oxide or the like can be used. A positive electrode tab 42 that protrudes toward outside (left side in FIG. 2) in the Y direction is provided in one side edge portion of the positive electrode. The positive electrode tab 42 is an area in which the positive electrode active material layer is not formed and the positive electrode core is exposed.

The negative electrode includes a negative electrode core that is a foil-like metal member and a negative electrode active material layer formed on a surface of the negative electrode core. As the negative electrode core, a metal material, such as copper, a copper alloy, or the like, that has predetermined conductivity can be used. The negative electrode active material layer is a layer including a negative electrode active material. The negative electrode active material is a material that is capable of reversibly storing and releasing charge carriers in a relationship with the positive electrode active material. As the negative electrode active material, a carbon material, a silicon-based material, or the like can be used. A negative electrode tab 44 that protrudes toward outside (right side in FIG. 2) in the Y direction is provided in one side edge portion of the negative electrode. The negative electrode tab 44 is an area in which the negative electrode active material layer is not formed and the negative electrode core is exposed.

The separator prevents the positive electrode and the negative electrode from contacting with each other, and the charge carriers pass through the separator. As the separator, a resin porous film in which multiple fine holes through which the charge carriers can pass are formed can be used.

As the electrolytic solution that is housed in the case 50 with the electrode body 40, an electrolytic solution used for a known secondary battery can be used without any particular limitation. A nonaqueous electrolytic solution can be a solution obtained by dissolving a supporting salt in a nonaqueous solvent.

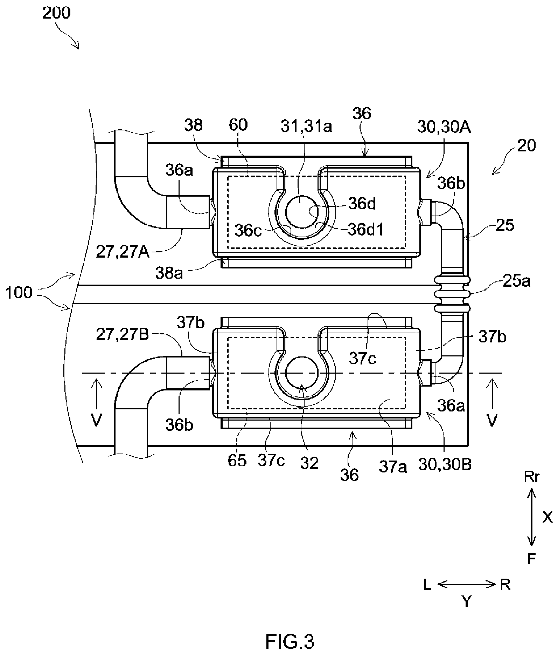

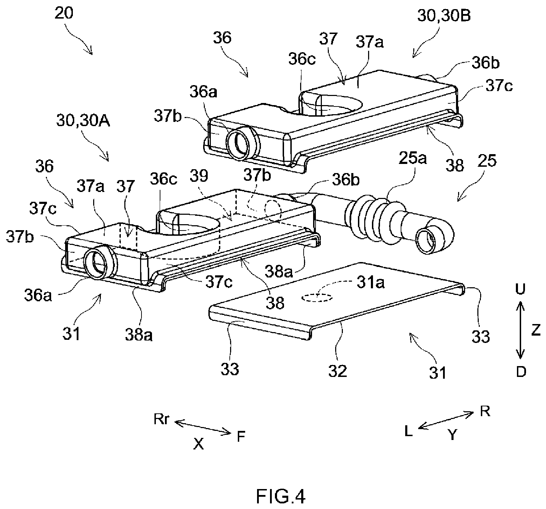

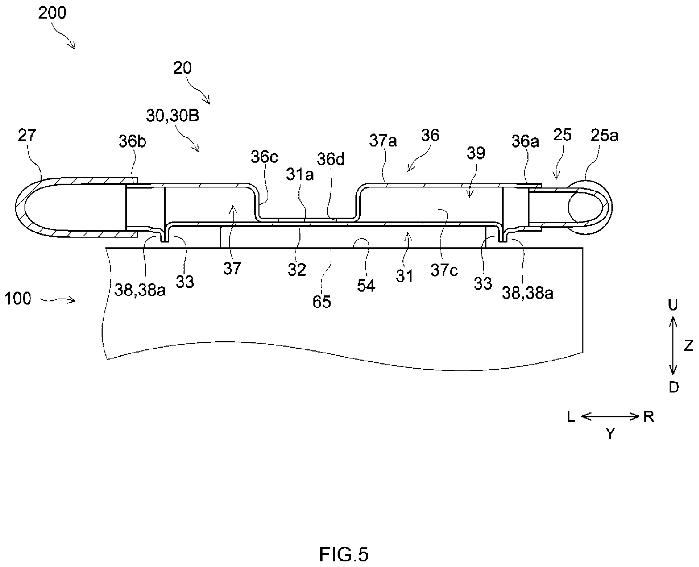

The electricity storage devices 100 are electrically connected together via bus bars 20. FIG. 3 is a plan view of the bus bar 20. In FIG. 3, the bus bar 20 viewed from above is illustrated. FIG. 4 is a schematic view illustrating a configuration of the bus bar 20. In FIG. 4, in one terminal cooling part 30 of a pair of terminal cooling parts 30 that form the bus bar 20, a first plate 31 and a second plate 36 are illustrated virtually separated from each other. FIG. 5 is a cross-sectional view taken along the line V-V of FIG. 3.

### <Bus Bar 20>

As illustrated in FIG. 3, the bus bar 20 includes the pair of terminal cooling parts 30 and a pipe 25. The bus bar 20 connects the electrode terminals 60 and 65 of adjacent electricity storage devices 100 of the multiple electricity storage devices 100. In each of the multiple electricity storage devices 100, the positive electrode terminal 60 is provided at one end of the lid 54 having an approximately rectangular shape and the negative electrode terminal 65 is provided at the other end thereof (see FIG. 2). The multiple electricity storage devices 100 are arranged such that, in the stacking direction, the positive electrode terminals 60 and the negative electrode terminals 65 are alternately aligned (see FIG. 1). The bus bar 20 connects the positive electrode terminal 60 and the negative electrode terminal 65 arranged along the stacking direction.

### <Pair of Terminal Cooling Parts 30>

As illustrated in FIG. 4, the pair of terminal cooling parts 30 include the first plate 31 formed of metal and the second plate 36 formed of metal. The first plate 31 and the second plate 36 are made of metal. The terminal cooling part 30 has an approximately rectangular shape in a top plan view. The first plate 31 and the second plate 36 are formed of metal having desired conductivity and can be formed of aluminum, an aluminum alloy, or the like. Each of the first plate 31 and the second plate 36 is formed of a single metal plate. Although there is no particular limitation on a method for forming the first plate 31 and the second plate 36, the first plate 31 and the second plate 36 may be formed, for example, by drawing.

### <First Plate 31>

The first plate 31 is superimposed on an end surface of the electrode terminal (the positive electrode terminal 60 or the negative electrode terminal 65) of the electricity storage device 100 (see FIG. 1 and FIG. 3). In this embodiment, the first plate 31 is superimposed on an upper surface of each of the electrode terminals 60 and 65. The first plate 31 includes a flat plate portion 32 and a first end portion 33. The flat plate portion 32 has an approximately rectangular shape. The first end portion 33 is a portion that is bent in a direction in which a corresponding one of the electrode terminals 60 and 65 is connected. The first end portion 33 extends from each of end portions of the flat plate portion 32 in the long side direction.

The first plate 31 has dimensions that allows the first plate 31 to cover the electrode terminals 60 and 65 (see FIG. 3). In the short side direction X and long side direction Y, dimensions of the flat plate portion 32 are larger than those of each of the electrode terminals. As illustrated in FIG. 5, a height of the first end portion 33 is smaller than a height of the electrode terminal 60. Thus, the first plate 31 does not interfere with the lid 54. Similarly, the height of the first end portion 33 is smaller than a height of the electrode terminal 65.

The first plate 31 includes a joining portion 31a that is joined to each of the electrode terminals 60 and 65. The joining portion 31a is provided in the flat plate portion 32 of the first plate 31. There is no particular limitation on a position of the joining portion 31a as long as the joining portion 31a can be joined to each of the electrode terminals 60 and 65. The joining portion 31a may be provided in a central portion of the flat plate portion 32 of the first plate 31 and may be provided at an end portion thereof. The position of the joining portion 31a can be set as appropriate in accordance with configurations of the electrode terminals 60 and 65 and the first plate 31.

### <Second Plate 36>

The second plate 36 is joined to the first plate 31 so as to be superimposed thereon. In this embodiment, the second plate 36 has a shape corresponding to the first plate 31 and is approximately rectangular in a top plan view. The second plate 36 has an approximately same planar shape as that of the first plate 31 except for a non-stacked layer area 36d that will be described later in a top plan view.

As illustrated in FIG. 4, the second plate 36 includes a raised portion 37. The raised portion 37 protrudes upward with respect to the first plate 31. The raised portion 37 has a lid shape that is raised upward and a space is formed inside the raised portion 37. The raised portion 37 is formed by an upper surface portion 37a, a pair of short-side side surface portions 37b, and a pair of long-side side surface portions 37c. The upper surface portion 37a is approximately parallel to the first plate 31. The pair of short-side side surface portions 37b approximately perpendicularly extends downward (toward the first plate 31) from the upper surface portion 37a. The side surface portions 37b extend along the short side direction X. The pair of long-side side surface portions 37c approximately perpendicular extends downward (toward the first plate 31) from the upper surface portion 37a. The side surface portions 37c extends along the long side direction Y. One of the pair of side surface portions 37c at a rear side is recessed toward the non-stacked layer area 36d that will be described later.

The second plate 36 includes a portion that is opposed to the first plate 31. In this embodiment, the upper surface portion 37a of the raised portion 37 of the second plate 36 is opposed to a surface of the first plate 31 at an opposite side to a surface of the first plate 31 that is superimposed on an upper surface of the electrode terminal except for the joining portion 31a. The pair of short-side side surface portions 37b and the pair of long-side side surface portions 37c extend upward from a portion joined to the first plate 31. Thus, a space 39 is formed between the first plate 31 and the second plate 36. The space 39 functions as a refrigerant circulating space in which a refrigerant that is supplied from the refrigerant supply device 29 (see FIG. 1) circulates.

A periphery (a peripheral portion 38 surrounding the raised portion 37) of the raised portion 37 of the second plate 36 is joined to the first plate 31. In this embodiment, the peripheral portion 38 of the second plate 36 has a shape corresponding to an outer peripheral shape of the first plate 31. The peripheral portion 38 of the second plate 36 is continuously joined to a peripheral portion of the first plate 31 in a circumferential direction. Thus, an interface between the first plate 31 and the second plate 36 is sealed.

In this embodiment, the second plate 36 includes a second end portion 38a along a corresponding one of the first end portions 33 of the first plate 31. The second end portions 38a are short-side end portions of the second plate 36 and are included in the peripheral portion 38. The second end portions 38a are provided at both ends of the peripheral portion 38 in the long side direction. Each of the second end portions 38a is joined to a corresponding one of the first end portions 33. A lower end of the second end portion 38a is made to match a lower end of the first end portion 33 (see FIG. 5). Therefore, similar to the first plate 31, the second plate 36 does not interfere with the lid 54.

There is no particular limitation on a method for joining the first plate 31 and the second plate 36. The first plate 31 and the second plate 36 can be joined to each other by a known method, such as brazing, welding, or the like. The first plate 31 and the second plate 36 may be metallurgically joined. In this embodiment, the first plate 31 and the second plate 36 are joined to each other by brazing. Therefore, the first plate 31 and the second plate 36 are joined via a brazing material. Since the first plate 31 and the second plate 36 are joined via the brazing material, excellent positional accuracy of joining is achieved.

As illustrated in FIG. 3, the non-stacked layer area 36d that does not overlap with the first plate 31 is formed in the second plate 36. The non-stacked layer area 36d of the second plate 36 is provided so as to correspond to the joining portion 31a of the first plate 31. In other words, in the joining portion 31a (the non-stacked layer area 36d of the second plate 36) of the first plate 31, the first plate 31 and the second plate 36 do not overlap with each other. In this embodiment, the non-stacked layer area 36d is a hole formed in an approximately central portion of the second plate 36. The non-stacked layer area 36d is opened in an approximately circular shape. A peripheral portion 36d1 of the non-stacked layer area 36d is formed into an approximately annular shape and extends along the first plate 31. The peripheral portion 36d1 of the non-stacked layer area 36d is connected to the flat plate portion 32 of the first plate 31. The non-stacked layer area 36d is surrounded by the raised portion 37 except for a rear portion. A side surface portion 36c that is connected to the side surface portions 37c extends upward from an outer edge of the peripheral portion 36d1 of the non-stacked layer area 36d except for the rear portion. The non-stacked layer area 36d is not limited thereto. For example, in a case where the joining portion 31a is provided in an end portion of the first plate 31, the non-stacked layer area 36d may be a notch provided in the second plate 36. The non-stacked layer area 36d may be entirely surrounded by a portion forming the raised portion 37.

The second plate 36 includes a supply port 36a and a discharge port 36b. The supply port 36a supplies a refrigerant to the refrigerant circulating space 39 (which will be hereinafter also referred to simply as the "space 39"). The discharge port 36b supplies the refrigerant from the space 39. Each of the supply port 36a and the discharge port 36b protrudes in a cylindrical shape. The supply port 36a and the discharge port 36b are provided to be connected to the space 39. The supply port 36a and the discharge port 36b can be provided at a side surface of the second plate 36 that forms the raised portion 37. In this embodiment, the supply port 36a and the discharge port 36b are provided in the side surface portions 37b. The supply port 36a and the discharge port 36b are provided at opposite sides to each other along the longitudinal direction of each of the electrode terminals 60 and 65. Herein, the supply port 36a is provided in one of the pair of side surface portions 37b at a left side. The discharge port 36b is provided in one of the pair of side surface portions 37b at a right side.

In this embodiment, the supply port 36a and the discharge port 36b have the same shape. Since the supply port 36a and the discharge port 36b have the same shape, the supply port 36a and the discharge port 36b can be switched around as appropriate in accordance with a refrigerant supply direction. Note that the supply port 36a and the discharge port 36b may have different shapes.

Positions of the supply port 36a and the discharge port 36b are not limited to those in the embodiment described above. It is not necessary to provide the supply port 36a and the discharge port 36b in different ones of the pair of side surface portions 37b. The supply port 36a and the discharge port 36b may be provided in the same side surface portion 37b. The supply port 36a and the discharge port 36b may be provided in the side surface portions 37c.

In the embodiment described above, the terminal cooling part 30 for an electricity storage device includes the first plate 31 formed of metal and the second plate 36 formed of metal. The first plate 31 is superimposed on the end surface of each of the electrode terminals 60 and 65 of the electricity storage device 100. The first plate 31 includes the joining portion 31a that is joined to each of the electrode terminals 60 and 65. The second plate 36 is opposed to the surface of the first plate 31 at the opposed side to the surface of the first plate 31 that is superimposed on the end surface of each of the electrode terminals 60 and 65 except for the joining portion 31a. The second plate 36 includes the raised portion 37 that forms the refrigerant circulating space 39 between the raised portion 37 and the first plate 31. The second plate 36 is formed such that the periphery of the raised portion 37 is joined to the first plate 31. The second plate 36 includes the supply port 36a via which the refrigerant is supplied to the refrigerant circulating space 39 and the discharge port 36b via which the refrigerant is discharged from the refrigerant circulating space 39. According to the terminal cooling part 30, cooling efficiency of the electrode terminals 60 and 65 temperatures of which can rise during charging and discharging of the electricity storage device 100 is increased.

In the embodiment described above, as illustrated in FIG. 5, in the joining portion 31a of the first plate 31, the first plate 31 and the second plate 36 do not overlap with each other. The terminal cooling part 30 is connected to the electrode terminal 60 in the joining portion 31a in which the first plate 31 and the second plate 36 do not overlap with each other. There is no particular limitation on a method for connecting the terminal cooling part 30 and the electrode terminal 60. The terminal cooling part 30 and the electrode terminal 60 can be connected to each other, for example, by laser welding or the like. During welding of the terminal cooling part 30 and the electrode terminal 60, there is a single metal plate in the joining portion 31a. Thus, a height of the joining portion 31a is stabilized. As a result, it becomes easy to focus on during laser welding and the terminal cooling part 30 and the electrode terminal 60 can be easily welded in a stable manner. Energy required for laser welding is smaller as compared to a case where a part formed of multiple plates is joined to the electrode terminal 60.

In the embodiment described above, each of the electrode terminals 60 and 65 has a rectangular shape. The supply port 36a and the discharge port 36b are provided at opposite sides of each of the electrode terminals 60 and 65 in the long side direction. Therefore, a distance for which the refrigerant passes in the terminal cooling part 30 can be increased. Thus, cooling efficiency of the terminal cooling part 30 can be increased. As a result, the cooling efficiency of the electrode terminals 60 and 65 can be increased.

The pair of terminal cooling parts 30 are connected to each other by the pipe 25 via the supply port 36a and the second plate 36 to form the bus bar 20.

### <Pipe 25>

The pipe 25 connects the discharge port 36b of one of the pair of terminal cooling parts 30, that is, a terminal cooling part 30A, and the other one of the pair of terminal cooling parts 30, that is, a terminal cooling part 30B, to each other. The space 39 of the terminal cooling part 30A and the space 39 of the terminal cooling part 30B are connected to each other via the pipe 25. The pipe 25 is formed of (made of) metal. The pipe 25 is formed of metal having desired conductivity, and can be formed of aluminum, an aluminum alloy, or the like. From a viewpoint of increasing conductivity between the pair of terminal cooling parts 30, the pipe 25 can be formed of the same type of metal as that of the pair of terminal cooling parts 30.

The pipe 25 may have a shape that allows the refrigerant to pass therein. The pipe 25 is a cylindrical metal pipe. An inner diameter of the pipe 25 is approximately the same as each of outer diameters of the supply port 36a and the discharge port 36b of the terminal cooling part 30. Thus, the pipe 25 can be fitted to the supply port 36a and the discharge port 36b of the terminal cooling part 30. There is no particular limitation on a method for connecting the pipe 25 to the supply port 36a and the discharge port 36b of the terminal cooling part 30. The pipe 25 may be connected to the supply port 36a and the discharge port 36b of the terminal cooling part 30, for example, by welding, brazing, or the like. The pipe 25 may be connected to the supply port 36a and the discharge port 36b of the terminal cooling part 30 by screw connection, welding connection, or the like.

The pipe 25 is a lateral U-shaped metal pipe. A pair of openings are provided at end portions of the pipe 25. The pipe 25 includes a straight-line portion 25a that connects portions in which the openings are provided. The straight-line portion 25a extends along a direction (the short side direction X) in which adjacent ones of the electricity storage devices 100 are arranged. Both end portions of the straight-line portion 25a are bent in the same direction (leftward in a form illustrated in FIG. 3). In other words, the pair of openings provided in the pipe 25 face in the same direction.

In this embodiment, the pipe 25 is formed of a flexible pipe. A central portion of the straight-line portion 25a of the pipe 25 is alternately folded back and forth along a direction in which the straight-line portion 25a extends. The central portion of the straight-line portion 25a has a so-called bellows-folded shape. Thus, the straight-line portion 25a has flexibility and can be stretched and bent.

As illustrated in FIG. 3, the pipe 25 connects the terminal cooling part 30A and the terminal cooling part 30B to each other. Each of the terminal cooling part 30A and the terminal cooling part 30B has an approximately rectangular shape, and the terminal cooling part 30A and the terminal cooling part 30B have the same shape. The terminal cooling part 30A and the terminal cooling part 30B are arranged to extend along the long side direction Y such that long sides thereof are along the long sides of the electricity storage devices 100. The terminal cooling part 30B is arranged in front of the terminal cooling part 30A.

In the terminal cooling parts 30A and 30B arranged so as to extend along the long side direction Y, the pipe 25 is connected to the supply port 36a and the discharge port 36b that protrudes rightward. The pipe 25 connects the discharge port 36b of the terminal cooling part 30A and the supply port 36a of the terminal cooling part 30B to each other. The supply port 36a of the terminal cooling part 30A and the discharge port 36b of the terminal cooling part 30B are not connected to each other by the pipe 25. A nonconductive pipe 27 is connected to the supply port 36a of the terminal cooling part 30A and the discharge port 36b of the terminal cooling part 30B.

### <Nonconductive Pipe 27>

As illustrated in FIG. 1, the nonconductive pipe 27 is a pipe that connects adjacent bus bars 20. The spaces 39 of the adjacent bus bars 20 are connected to each other via the nonconductive pipe 27. The nonconductive pipe 27 is a pipe formed of an insulating material. The nonconductive pipe 27 can be formed of, for example, ceramic, plastic, or the like. In this embodiment, the nonconductive pipe 27 is formed of ceramic.

The nonconductive pipe 27 is a pipe having a lateral U shape. A pair of openings are provided in the nonconductive pipe 27. The pair of openings of the nonconductive pipe 27 are formed such that the nonconductive pipe 27 includes a straight-line portion that connects portions at which the openings are provided. The straight-line portion extends along a direction (the short side direction X) in which the adjacent electricity storage devices 100 are arranged. Both end portions of the straight-line portion are bent in the same direction (rightward in the form illustrated in FIG. 3). In other words, the pair of openings provided in the nonconductive pipe 27 faces in the same direction.

As illustrated in FIG. 3, the nonconductive pipe 27 is connected to the supply port 36a of the terminal cooling part 30A. Another nonconductive pipe 27 is connected to the discharge port 36b of the terminal cooling part 30B. A nonconductive pipe 27A that extends from rear is connected to the supply port 36a of the terminal cooling part 30A. A nonconductive pipe 27B that extends from front is connected to the supply port 36b of the terminal cooling part 30B. The nonconductive pipe 27A connects the discharge port 36b of the rear bus bar 20 and the supply port 36a of the terminal cooling part 30A. The nonconductive pipe 27B connects the supply port 36a of the front bus bar 20 and the supply port 36a of the terminal cooling part 30B. The nonconductive pipe 27 may be connected to a corresponding one of the supply ports 36a and the discharge ports 36b of the terminal cooling parts 30, for example, by a hose clip or the like. The nonconductive pipe 27 may be connected to a corresponding one of the supply port 36a and the discharge port 36b of the terminal cooling parts 30 by screw connection, heat welding, or the like.

As illustrated in FIG. 1, the refrigerant is supplied to the bus bars 20 from the refrigerant supply device 29.

### <Refrigerant Supply Device 29>

The refrigerant supply device 29 is connected to the supply port 36a of the bus bar 20 connected to the rear most electricity storage device 100. There is no particular limitation on the refrigerant supply device 29 as long as the refrigerant supply device 29 can supply the refrigerant to the space 39. In this embodiment, as the refrigerant supply device 29, a device that can be also referred to as a chiller and causes the refrigerant at a preset temperature to circulate is used. A temperature of the refrigerant that is supplied to the space 39 can be, for example, a normal temperature, a temperature lower than the normal temperature, or the like. Although there is no particular limitation, as the refrigerant, water, an antifreeze solution, an insulating liquid, or the like can be used. The refrigerant supply device 29 is arranged outside the electricity storage device 100. The refrigerant supply device 29 is also connected to the discharge port 36b of the bus bar 20 connected to the frontmost electricity storage device 100. Thus, the refrigerant that flows in the adjacent bus bars 20 circulates while the temperature thereof are adjusted. In this embodiment, multiple bus bars 20 arranged at left of the electricity storage devices 100 and multiple bus bars 20 arranged at right of the electricity storage devices 100 are connected to different refrigerant supply devices 29. A manner in which the bus bars 20 and the refrigerant supply devices 29 are connected is not limited thereto, and the multiple bus bars 20 arrange at left of the electricity storage devices 100 and the multiple bus bars 20 at right of the electricity storage devices 100 may be connected to same refrigerant supply devices 29.

The refrigerant that is supplied from the refrigerant supply device 29 is supplied to the terminal cooling part 30, the pipe 25, the terminal cooling part 30, and the nonconductive pipe 27 in this order from rear to front. As illustrated in FIG. 3, a direction from the supply port 36a of one of the terminal cooling parts 30, that is, the terminal cooling part 30A, to the discharge port 36b thereof and a direction from the supply port 36a of the other one of the terminal cooling parts 30, that is, the terminal cooling part 30B, to the discharge port 36b thereof are opposite to each other. Thus, the refrigerant that is supplied from the refrigerant supply device 29 circulates in opposite directions in the one of the terminal cooling parts 30, that is, the terminal cooling part 30A, and the other one of the terminal cooling parts 30, that is, the terminal cooling part 30B. The refrigerant that is supplied from the refrigerant supply device 29 circulates inside the bus bar 20 from rear to front while being meandered left and right. Thus, a distance for which the refrigerant passes in the bus bar 20 is increased and cooling efficiency of the bus bar 20 can be increased. As a result, the cooling efficiency of the electrode terminals 60 and 65 can be increased. Moreover, pipe connection between the bus bar 20 and the nonconductive pipe 27 can be made simple.

In the embodiment described above, the bus bar 20 includes the pair of terminal cooling parts 30A and 30B and the pipe 25 formed of metal. The pipe 25 connects the discharge port 36b of the terminal cooling part 30A that is one of the pair of terminal cooling parts 30 and the supply port 36a of the terminal cooling part 30B that is the other one of the pair of terminal cooling parts 30. In the bus bar 20 described above, the refrigerant circulating spaces 39 inside the pair of terminal cooling parts 30A and 30B are connected to each other by the pipe 25. Therefore, the bus bar 20 can not only electrically connect the electrode terminals 60 and 65 of the adjacent electricity storage devices 100 but also cool the electrode terminals 60 and 65 of the adjacent electricity storage devices 100. By using the bus bar 20 described above, the cooling efficiency of the electrode terminals 60 and 65 the temperatures of which can rise during charging and discharging of the electricity storage devices 100 (the electricity storage device module 200) is increased.

In the embodiment, described above, as illustrated in FIG. 5, the first plate 31 includes the first end portion 33. The first end portion 33 is bent in a direction (in this embodiment, downward) in which the electrode terminal 60 is connected. Thus, the first end portion 33 of the first plate 31 reaches below the joining portion 31a. The second plate 36 includes the second end portion 38a. The second end portion 38a is along the first end portion 33 of the first plate 31. Thus, similar to the first end portion 33 of the first plate 31, the second end portion 38a of the second plate 36 reaches below the joining portion 31a. Therefore, the side surface portions 37b extend below the upper surface of the electrode terminal 60. The height of the side surface portions 37b is larger than a gap between the flat plate portion 32 of the first plate 31 and the upper surface portion 37a of the second plate 36. According to the above-described configuration, the height of the side surface portions 37b is increased without increasing a height of the bus bar 20. Thus, diameters of the supply port 36a and the discharge port 36b provided in the side surface portions 37b can be increased. Since the diameters of the supply port 36a and the discharge port 36b provided in the side surface portions 37b are increased, pressure loss of the refrigerant that circulates inside is suppressed, and the cooling efficiency of the electrode terminals 60 and 65 can be increased. Moreover, since the height of the bus bar 20 is kept low, reduction in space of the electricity storage device module 200 can be achieved.

In the embodiment described above, as illustrated in FIG. 1 and FIG. 3, the nonconductive pipe 27 is connected to the supply port 36a of the terminal cooling part 30A that is one of the pair of the terminal cooling parts 30 and the discharge port 36b of the terminal cooling part 30B that is the other one of the terminal cooling parts 30. The refrigerant circulating spaces 39 of the adjacent bus bars 20 are connected to each other in a state where the adjacent bus bars 20 are not electrically connected. Thus, electrical connection between the adjacent electrode terminals 60 and 65 and cooling of the electrode terminals 60 and 65 can be realized by a simpler configuration.

In the embodiment described above, the pipe 25 is formed of a flexible pipe. Thus, even in a case where the electricity storage devices 100 vibrate when the electricity storage device module 200 is used, a case where the electricity storage devices 100 expand and contract as being charged and discharged, the pipe 25 can easily follow the electrode terminals 60 and 65. As a result, the pipe 25 is less likely to be damaged. Moreover, since the pipe 25 follows movement of the electrode terminals 60 and 65, a load on the nonconductive pipe 27 is reduced, so that the nonconductive pipe 27 is less likely to be damaged.

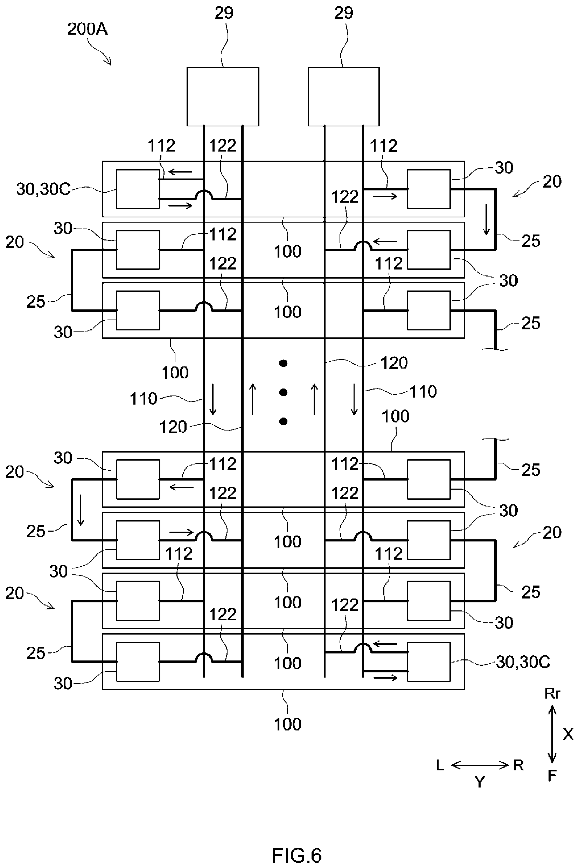

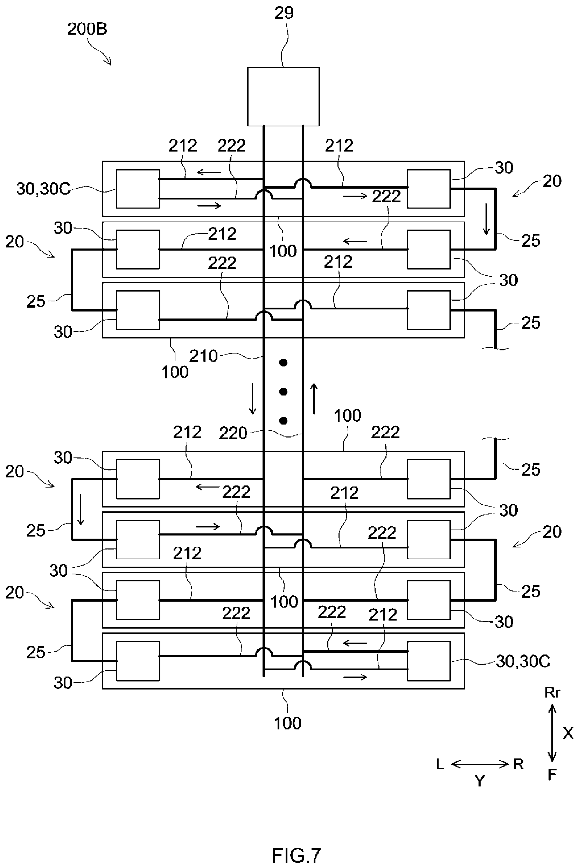

Note that supply of the refrigerant to the bus bar 20 is not limited to the embodiment described above. FIG. 6 is a schematic view of an electricity storage device module 200A according to another embodiment. FIG. 7 is a schematic view of an electricity storage device module 200B according to still another embodiment. In each of the electricity storage device modules 200A and 200B, a supply path of the refrigerant to the bus bar 20 is different from that of the electricity storage device module 200. Note that, in each of FIG. 6 and FIG. 7, in a point where a header pipe and a branch pipe intersect each other, the branch pipe is illustrated in a semicircular arc-shape, but this does not illustrate an actual shape of the branch pipe.

In the embodiment illustrated in FIG. 6, a refrigerant circulation path is set by head pipes 110 and 120 and branch pipes 112 and 122. As illustrated in FIG. 6, two pipes are provided for each of the head pipes 110 and 120. One of the head pipes 110 and 120 forms a refrigerant supply path to the bus bar 20 at left. The other one of the head pipes 110 and 120 forms a refrigerant supply path to the bus bar 20 at right. The refrigerant supply path for the bus bar 20 at left and the refrigerant supply path for the bus bar 20 at right may be formed to have configurations similar to each other.

The head pipes 110 and 120 are provided closer to center of the electricity storage device 100 than the bus bars 20. The head pipes 110 and 120 pass above the electricity storage device 100. The head pipes 110 and 120 extend approximately in parallel to each other. Multiple branch pipes 112 extend from the head pipe 110. Multiple branch pipes 122 extend from the head pipe 120. Each of the multiple branch pipes 112 and 122 extends to a corresponding one of multiple terminal cooling parts 30 arranged along the stacking direction. A direction in which the branch pipe 112 extends and a direction in which the branch pipe 122 extends are the same. The branch pipes 112 and the branch pipes 122 are alternately connected to the multiple terminal cooling parts 30 arranged along the stacking direction. Therefore, of a pair of terminal cooling parts 30 that form the bus bar 20, one terminal cooling parts 30 is connected to the branch pipe 112 and the other terminal cooling part 30 is connected to the branch pipe 122.

Note that, in a case where the number of the electricity storage devices 100 that form the electricity storage device module 200A is an odd number, a terminal cooling part 30C connected to both the branch pipes 112 and 122 may be attached to an electrode terminal of the electricity storage device 100 at an end in the stacking direction.

The head pipes 110 and 120 are connected to the refrigerant supply device 29. The refrigerant supply device 29 supplies the refrigerant to the head pipe 110. The refrigerant supply device 29 is configured such that the refrigerant that has passed through the header pipe 120 flows therein. The refrigerant supplied to the header pipe 110 flows in the one terminal cooling part 30 through the branch pipe 112. The refrigerant that has flowed in the other terminal cooling part 30 passes through the pipe 25 to flow in the other terminal cooling part 30. The refrigerant that has flowed in the other terminal cooling part 30 passes through the branch pipe 122 to flow in the header pipe 120. The refrigerant that has flowed in the header pipe 120 flows in the refrigerant supply device 29. A temperature of the refrigerant that has flowed in the refrigerant supply device 29 is regulated and the refrigerant flows in the header pipe 110 again. Thus, the refrigerant that flows in the adjacent bus bars 20 circulates while the temperature thereof is regulated. In the embodiment illustrated in FIG. 6, refrigerant paths similar to each other are provided at left and right sides of the electricity storage devices 100.

In the embodiment illustrated in FIG. 7, a refrigerant circulation path is set by head pipes 210 and 220 and branch pipes 212 and 222. As illustrated in FIG. 7, one pipe is provided for each of the head pipes 210 and 220.

The head pipes 210 and 220 are provided in a central portion in the long side direction Y of the electricity storage devices 100. The head pipes 210 and 220 pass above the electricity storage devices 100. The head pipes 210 and 220 extend approximately in parallel to each other. Multiple branch pipes 212 extend from the head pipe 210. Multiple branch pipes 222 extend from the head pipe 220. Each of the multiple branch pipes 212 and 222 extends to a corresponding one of terminal cooling parts 30 arranged along the stacking direction. The branch pipes 212 and 222 extend from the head pipes 210 and 220 alternately leftward and rightward. The branch pipes 212 and the branch pipes 222 are alternately connected to the multiple terminal cooling parts 30 arranged along the stacking direction. Therefore, of a pair of terminal cooling parts 30 that form the bus bar 20, one terminal cooling part 30 is connected to the branch pipe 212 and the other terminal cooling part 30 is connected to the branch pipe 222.

Note that, in a case where the number of the electricity storage devices 100 that form the electricity storage device module 200B is an odd number, a terminal cooling part 30C connected to both the branch pipes 212 and 222 may be attached to an electrode terminal of the electricity storage device 100 at an end in the stacking direction.

The head pipes 210 and 220 are connected to the refrigerant supply device 29. The refrigerant supply device 29 supplies the refrigerant to the head pipe 210. The refrigerant supply device 29 is configured such that the refrigerant that has passed through the header pipe 220 flows therein. The refrigerant supplied to the header pipe 210 flows in the one terminal cooling part 30 through the branch pipe 212. The refrigerant that has flowed in the other terminal cooling part 30 passes through the pipe 25 to flow in the other terminal cooling part 30. The refrigerant that has flowed in the other terminal cooling part 30 flows in the head pipe 220 through the branch pipe 222. The refrigerant that has flowed in the head pipe 220 flows in the refrigerant supply device 29. A temperature of the refrigerant that has flowed in the refrigerant supply device 29 is regulated and the refrigerant flows in the header pipe 210 again. Thus, the refrigerant that flows in the adjacent bus bars 20 circulates while the temperature thereof is regulated.

The technology disclosed herein has been described above in various forms. However, the embodiments described above or the like shall not limit the present invention, unless specifically stated otherwise. Various changes can be made to the technology disclosed herein, and each of components and processes described herein can be omitted as appropriate or can be combined with another one or other ones of the components and the processes as appropriate, unless a particular problem occurs. The present specification includes disclosure set forth in the following items.

First item: A terminal cooling part for an electricity storage device, the terminal cooling part including a first plate that is formed of metal, is superimposed on an end surface of an electrode terminal of the electricity storage device, and includes a joining portion that is joined to the electrode terminal, and a second plate that is formed of metal, is opposed to a surface of the first plate at an opposite side to a surface of the first plate that is superimposed on the end surface of the electrode terminal except for the joining portion, includes a raised portion that forms a refrigerant circulating space between the raised portion and the first plate, and is configured such that a portion around the raised portion is joined to the first plate, in which the second plate includes a supply port via which a refrigerant is supplied to the refrigerant circulating space, and a discharge port via which the refrigerant is discharged from the refrigerant circulating space.

Second Item: The terminal cooling part for an electricity storage device according to the first item, in which the first plate includes a first end portion that is bent in a direction in which the electrode terminal is connected, and the second plate includes a second end portion that is along the first end portion of the first plate.

Third Item: The terminal cooling part for an electricity storage device according to the first or second item, in which the first plate and the second plate are joined to each other via a brazing material.

Fourth Item: The terminal cooling part for an electricity storage device according to any one of the first to third items, in which the electrode terminal has a rectangular shape, and the supply port and the discharge port are provided at opposites sides to each other along a long side direction of the electrode terminal.

Fifth Item: A bus bar for an electricity storage device, the bus bar including a pair of terminal cooling parts, and a pipe formed of metal, in which each of the pair of terminal cooling parts includes a first plate that is formed of metal, is superimposed on an end surface of an electrode terminal of the electricity storage device, and includes a joining portion that is joined to the electrode terminal, and a second plate that is formed of metal, is opposed to a surface of the first plate at an opposite side to a surface of the first plate that is superimposed on the end surface of the electrode terminal except for the joining portion, includes a raised portion that forms a refrigerant circulating space between the raised portion and the first plate, and is configured such that a portion around the raised portion is joined to the first plate, and the second plate includes a supply port via which a refrigerant is supplied to the refrigerant circulating space, and a discharge port via which the refrigerant is discharged from the refrigerant circulating space, and the pipe connects the discharge port of one terminal cooling part of the pair of terminal cooling parts and the supply port of the other terminal cooling part of the pair of terminal cooling parts to each other.

Sixth Item: The bus bar for an electricity storage device according to the fifth item, in which a direction from the supply port of the one terminal cooling part to the discharge port thereof and a direction from the supply port of the other terminal cooling part to the discharge port thereof are opposite to each other.

Seventh Item: The bus bar for an electricity storage device according to the fifth or sixth item, in which a nonconductive pipe is connected to the supply port of the one terminal cooling part and the discharge port of the other terminal cooling part.

Eighth Item: The bus bar for an electricity storage device according to any one of the fifth to seventh items, in which the pipe is formed of a flexible pipe.

Ninth Item: An electricity storage device module including multiple electricity storage devices stacked in a stacking direction, and a bus bar that connects electrode terminals of adjacent electricity storage devices of the multiple electricity storage devices to each other, in which the bus bar is the bus bar according to any one of the fifth to eighth items.

## Claims

1. A terminal cooling part (30) for an electricity storage device (100), the terminal cooling part (30) comprising:
a first plate (31) that is formed of metal, is superimposed on an end surface of an electrode terminal (60,65) of the electricity storage device (100), and includes a joining portion (31a) that is joined to the electrode terminal (60,65); and
a second plate (36) that is formed of metal, is opposed to a surface of the first plate (31) at an opposite side to a surface of the first plate (31) that is superimposed on the end surface of the electrode terminal (60,65) except for the joining portion (31a), includes a raised portion (37) that forms a refrigerant circulating space (39) between the raised portion (37) and the first plate (31), and is configured such that a portion around the raised portion (37) is joined to the first plate (31),
wherein
the second plate (36) includes
a supply port (36a) via which a refrigerant is supplied to the refrigerant circulating space (39), and
a discharge port (36b) via which the refrigerant is discharged from the refrigerant circulating space (39).

2. The terminal cooling part (30) for an electricity storage device (100) according to claim 1, wherein
the first plate (31) includes a first end portion (33) that is bent in a direction in which the electrode terminal (60,65) is connected, and
the second plate (36) includes a second end portion (38a) that is along the first end portion (33) of the first plate (31).

3. The terminal cooling part (30) for an electricity storage device (100) according to claim 1 or 2, wherein
the first plate (31) and the second plate (36) are joined to each other via a brazing material.

4. The terminal cooling part (30) for an electricity storage device (100) according to claim 1 or 2, wherein
the electrode terminal (60,65) has a rectangular shape, and
the supply port (36a) and the discharge port (36b) are provided at opposites sides to each other along a long side direction of the electrode terminal (60,65).

5. A bus bar (20) for an electricity storage device (100), the bus bar (20) comprising:
a pair of terminal cooling parts (30A,30B); and
a pipe (25) formed of metal,
wherein
each of the pair of terminal cooling parts (30A,30B) includes
a first plate (31) that is formed of metal, is superimposed on an end surface of an electrode terminal (60,65) of the electricity storage device (100), and includes a joining portion (31a) that is joined to the electrode terminal (60,65), and
a second plate (36) that is formed of metal, is opposed to a surface of the first plate (31) at an opposite side to a surface of the first plate (31) that is superimposed on the end surface of the electrode terminal (60,65) except for the joining portion (31a), includes a raised portion (37) that forms a refrigerant circulating space (39) between the raised portion (37) and the first plate (31), and is configured such that a portion around the raised portion (37) is joined to the first plate (31), and
the second plate (36) includes
a supply port (36a) via which a refrigerant is supplied to the refrigerant circulating space (39), and
a discharge port (36b) via which the refrigerant is discharged from the refrigerant circulating space (39), and
the pipe (25) connects the discharge port (36b) of one terminal cooling part (30A) of the pair of terminal cooling parts (30A,30B) and the supply port (36a) of the other terminal cooling part (30B) of the pair of terminal cooling parts (30A,30B) to each other.

6. The bus bar (20) for an electricity storage device (100) according to claim 5, wherein
a direction from the supply port (36a) of the one terminal cooling part (30A) to the discharge port (36b) thereof and a direction from the supply port (36a) of the other terminal cooling part (30B) to the discharge port (36b) thereof are opposite to each other.

7. The bus bar (20) for an electricity storage device (100) according to claim 5 or 6, wherein
a nonconductive pipe (27) is connected to the supply port (36a) of the one terminal cooling part (30A) and the discharge port (36b) of the other terminal cooling part (30B).

8. The bus bar (20) for an electricity storage device (100) according to claim 5 or 6, wherein
the pipe (25) is formed of a flexible pipe.

9. An electricity storage device module comprising:
multiple electricity storage devices (100) stacked in a stacking direction; and
a bus bar (20) that connects electrode terminals (60,65) of adjacent electricity storage devices (100) of the multiple electricity storage devices (100) to each other,
wherein
the bus bar (20) is the bus bar (20) according to claim 5 or 6.
